# EUROPÄISCHE PATENTSCHRIFT

(11) **EP 1 921 295 B1**
(45) Veröffentlichungstag und Bekanntmachung des Hinweises auf die Patenterteilung: **15.04.2020**
(21) Anmeldenummer: 07020134.8
(22) Anmeldetag: 15.10.2007
(51) Int. Cl.: F02D 11/10, F02D 41/30, F02D 41/14, F02D 41/18

(54) **Verfahren zum Betreiben einer Brennkraftmaschine**
Method for operating a combustion engine
Procédé destiné au fonctionnement d'un moteur à combustion interne

(30) Priorität: 08.11.2006 DE 102006053253
(43) Veröffentlichungstag der Anmeldung: 14.05.2008
(73) Patentinhaber: IAV GmbH Ingenieurgesellschaft Auto und Verkehr, 10587 Berlin (DE)
(72) Erfinder: Böhme, Thomas, Dr.-Ing., 29293 Wesendorf (DE); Gottschalk, Wolfram, Dr.-Ing., 39112 Magdeburg (DE); Magnor, Olaf, Dr.-Ing., 38104 Braunschweig (DE); Schnaubelt, Michael, 38518 Gifhorn (DE); Schultalbers, Matthias, 38536 Meinersen (DE)

(56) Entgegenhaltungen:
- EP-A2- 1 085 192
- EP-A2- 1 229 228
- DE-A1- 10 239 065
- US-A1- 2003 110 760

## Beschreibung

Die Erfindung betrifft ein Verfahren zum Betreiben einer Brennkraftmaschine mit einem Verbrennungsverfahren mit homogener Selbstzündung.

Allgemein vorbekannt sind Verbrennungsverfahren, bei welchen ein homogen vorgemischtes Kraftstoff-Luftgemisch durch Selbstzündung entzündet wird. Diese Brennverfahren werden häufig mit HCCI (Homogeneous Charge Compression Ignition) bezeichnet. Um eine homogene Verbrennung zu erzielen, muss ein ausreichend hohes Energieniveau im Zylinder vorliegen. Dies kann beispielsweise durch einen hohen Verdichtungsdruck und/oder durch eine ausreichende Menge heißen Restgases hervorgerufen werden. Die Steuerung der die Selbstzündung beeinflussenden Parameter, wie Verdichtung, Abgasrückführrate, Einspritzzeitpunkt, Kraftstoffverteilung, Luftfüllung etc. ist sehr komplex. Vorbekannt ist beispielsweise aus der DE 102 37 328 B4 ein Verfahren zur Steuerung des Verbrennungsablaufes, bei welchem ein HCCI-Verbrennungsprozess mittels interner Zustandsgrößen modelliert wird und die Ausgangsgrößen des modellierten Verbrennungsprozesses zum Regeln der die Selbstzündung beeinflussenden Stellgrößen genutzt werden. Einstellgrößen können hierbei beispielsweise die Ansteuerung von Ein- bzw. Auslassventilen der Brennkraftmaschine sein, welche hinsichtlich ihres Hubes und ihrer Ansteuerzeit variabel gesteuert werden können. Mittels variabler Ansteuerzeiten lassen sich sowohl die Kompression als auch die AGR-Rate bei interner Abgasrückführung beeinflussen. Weitere Einflussparameter können die Stellung eines AGR-Ventils, ein einstellbares Verdichtungsverhältnis oder die Einspritzparameter sein. Die Betriebsart homogener Selbstzündung ist dabei nicht in allen Betriebspunkten darstellbar, vielmehr sind diese meist auf den Bereich der Teillast begrenzt. Die Verfahrensführung ist insbesondere in den Randbereichen und bei dynamischen Betriebsübergängen schwierig. Aufgrund der Abmagerung bei homogener Selbstzündung ist das abgebbare Drehmoment begrenzt. Weiterhin ist der Kennfeldbereich nach unten in Richtung geringer Drehzahl und Last dadurch begrenzt, dass eine Selbstzündung überhaupt noch stattfinden kann. Das Brennverfahren findet bisher praktisch nur in begrenzten Kennfeldbereichen bei nahezu stationärem Betrieb Anwendung. In weiten Betriebsbereichen wird die Verbrennungskraftmaschine konventionell betrieben.

Vorbekannt sind Reglerstrukturen für konventionelle Brennverfahren, welche drehmomentenbasiert aus dem Fahrerwunsch (z. B. Fahrpedalstellung) einen Drehmomentsollwert für das von der Brennkraftmaschine abzugebende Drehmoment berechnen. Ein Beispiel für eine solche Reglerstruktur ist die DE 196 18 849 A1. Ausgehend von einem aus dem Fahrerwunsch bestimmten Wunschdrehmoment wird mittels arbeitspunktspezifischer, aus Kennfeldern ausgelesener Werte für den Zündwinkelwirkungsgrad und den Lambdawirkungsgrad ein korrigiertes Wunschdrehmoment berechnet, welches nachfolgend in einen Sollwert für die Füllung umgesetzt und mittels der Drosselklappe eingestellt wird.

Gemäß der EP 1 229 228 A2 ist ein Luft-Kraftstoff-Verhältnis-Steuersystem für einen Verbrennungsmotor Stand der Technik, das eine Motorzustandserfassungseinheit und eine Steuereinheit aufweist. Die Steuereinheit ist vorgesehen, um ein Zielmotordrehmoment auf der Grundlage eines Motorbetriebszustands zu berechnen, um ein Soll-EGR-Verhältnis, ein Soll-Luftüberschussverhältnis und eine Soll-Einlassluftmenge auf der Basis des Motorbetriebszustands und des Zielmotors zu berechnen.

Gemäß der EP 1 085 192 A2 ist ein Verdichtungs-Selbstzündungs-Benzinmotor Stand der Technik, der wahlweise eine zündkerzengezündete Verbrennung oder eine Selbst-Zündungsverbrennung in Übereinstimmung mit den Motorbetriebsbedingungen verwendet.

Gemäß der US 2003/110760 A1 ist ein Dieselmotor Stand der Technik, der mit einem NOx-Katalysator und einem Dieselpartikelfilter versehen ist, wobei während eines Normalbetriebs, einer Fettverbrennung während der Regeneration des NOx-Katalysators, eines Betriebs unter einem stöchiometrischen Luft-/Kraftstoff-Verhältnis ein magerer Verbrennungsbetrieb durchgeführt wird.

Gemäß der DE 102 39 065 A1 ist ein Verfahren zum Betrieb einer Brennkraftmaschine Stand der Technik, welche in zumindest einem ersten Motorbetriebsbereich durch Selbstzündung eines zumindest annähernd homogenen Kraftstoff-Luftgemisches betrieben wird, wobei die Verbrennung gemessen und in Abhängigkeit eines aus dieser Messung gewonnenen Signals zumindest ein Parameter für die Verbrennung für den nächsten Zyklus geregelt wird. Um Kraftstoffverbrauch und Emissionen zu senken und eine direkte Umsetzung der Lastanforderungen zu erreichen, ist vorgesehen, dass die ViertaktBrennkraftmaschine in zumindest einem zweiten Motorbetriebsbereich durch Fremdzündung eines zumindest annähernd homogenen Kraftstoff-Luftgemisches betrieben wird, und dass sowohl im ersten als auch im zweiten Motorbetriebsbereich die Verbrennung weitgehend unabhängig vom Drehmoment der Brennkraftmaschine geregelt wird.

Aufgabe der vorliegenden Erfindung ist es, ein Steuerverfahren für eine mit homogener Selbstzündung betriebene Brennkraftmaschine zu schaffen, welches den Betrieb der Brennkraftmaschine in weiten Betriebsbereichen ermöglicht und dabei eine einfach applizierbare Reglerstruktur zur Verfügung stellt.
Die Aufgabe wird erfindungsgemäß durch ein Verfahren mit den Merkmalen des Hauptanspruches gelöst.

Erfindungsgemäß vorteilhaft wird für den Betrieb mit homogener Selbstzündung die Kraftstoffmasse an das Verbrennungsverfahren angepasst, wobei ein für die homogene Verbrennung optimaler Lambdawert aus Prüfstandsergebnissen bekannt ist und Basiswert für eine Bestimmung des Lambdasollwertes ist. Parallel dazu wird ein Lambdawert an der Fettgrenze und der Magergrenze des Brennverfahrens berechnet und für die Berechnung des Lambdasollwertes zur Verfügung gestellt. Der Lambdasollwert setzt dabei den optimalen Lambdawert um, solange dieser Lambdawert innerhalb der Brennverfahrensgrenzen für den Lambdawert liegt. Um zu verhindern, dass der geforderte Lambdawert kleiner als die Fettgrenze oder größer als die Magergrenze wird, korrigiert die Lambdaregelung die Einspritzmenge fortlaufend, so dass die Brennverfahrensgrenzen nicht verlassen werden.

### Beschreibung

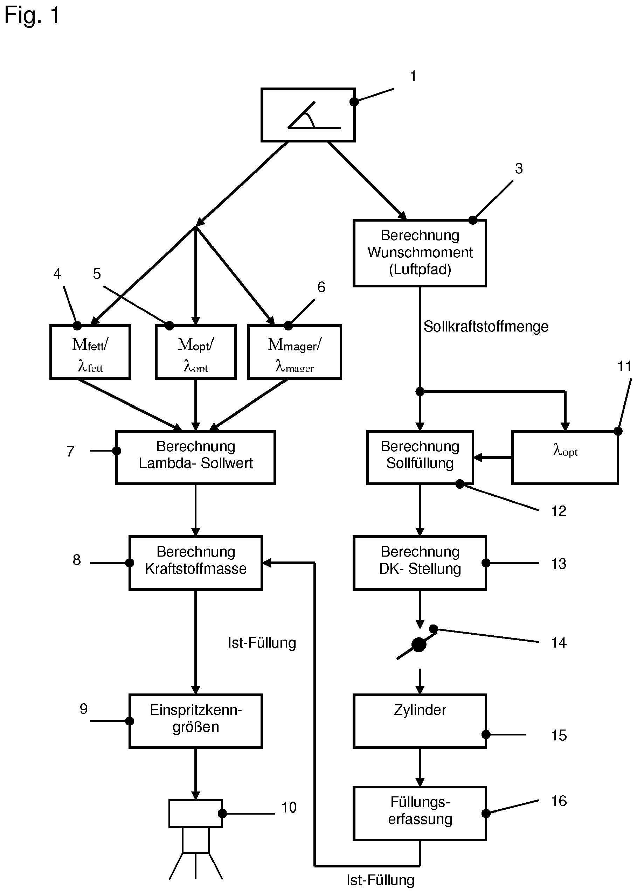

Nachfolgend wird ein Ausführungsbeispiel der Erfindung anhand eines Beispiels beschrieben.
Hierbei zeigt Fig. 1 eine Reglerstruktur für den Betrieb einer Brennkraftmaschine mit homogener Selbstzündung.

Aus der Stellung eines Fahrpedals 1 wird das vom Fahrer gewünschte Drehmoment errechnet und jeweils in ein korrespondierendes optimales, fettestes und magerstes Lambda (4, 5 und 6) umgerechnet. Dies erfolgt kennfeldbasiert, wobei für das Wunschmoment Luftpfad der durch Last und Drehzahl vorgegebene Betriebspunkt eine weitere Einflussgröße ist. Am Ausgang der Berechnung des Drehmomentes für den Luftpfad (3) steht eine sich aus diesem Wunschmoment (Luftpfad) ergebende Sollkraftstoffmenge zur Verfügung. Unter Annahme eines betriebspunktabhängigen optimalen Lambdawertes λ_{οpt} 11 für den aktuellen Arbeitspunkt ergibt sich mit der Sollkraftstoffmenge die Sollfüllung 12.
Diese wird nachfolgend in eine Drosselklappenposition 13 für den Betrieb mit homogener Selbstzündung umgerechnet. Der Luftpfad ist aufgrund der Gaslaufzeiten die langsamere Stellgröße im Vergleich zur Kraftstoffeinspritzung. Der Luftpfad gibt daher den Arbeitspunkt für den Kraftstoffpfad vor. Zur Berechnung der einzuspritzenden Kraftstoffmenge erfolgt eine Ermittlung der im Zylinder 15 vorliegenden Füllung (Füllungserfassung 16), welche Eingangsgröße der Berechnung der Kraftstoffmasse 8 ist. Der schnelle Pfad, die Kraftstoffzumessung, geht von der Berechnung des optimalen, fettesten und magersten Lambda (4, 5 und 6) aus. Den gesuchten Wert für das Luft-Kraftstoff-Verhältnis und somit die für das gewünschte Moment erforderliche Kraftstoffmenge erhält man aus der Berechnung des Lambdasollwertes. Zur Kompensation dynamischer Effekte lässt sich die Kraftstoffmasse zwischen dem fettesten und magersten daraus resultierenden Lambdawert einstellen. Mit dem so ermittelten Lambdasollwert erfolgt mit der aus der Füllungserfassung 16 berechneten Ist-Füllung die Berechnung der einzuspritzenden Kraftstoffmasse 9, welche über eine Steuerung von Einspritzzeit und Einspritzdauer im Injektor 10 umgesetzt wird.

## Patentansprüche

1. Verfahren zum Betreiben einer Brennkraftmaschine mit einem Verbrennungsverfahren mit homogener Selbstzündung, bei welchem der über ein Fahrpedal (1) vorgegebene Fahrerwunsch in ein von der Brennkraftmaschine abzugebendes Wunschmoment umgerechnet wird, wobei ein Füllungssollwert (12) für die Luftfüllung über einen arbeitspunktabhängig vorgebbaren Lambdawert (11) ermittelt wird, indem aus der Stellung des Fahrpedals (1) ein Wunschmoment für den Luftpfad errechnet wird, wobei der durch Last und Drehzahl vorgegebene Betriebspunkt eine weitere Einflussgröße ist, und am Ausgang einer Berechnung des Wunschdrehmomentes für den Luftpfad eine sich aus diesem Wunschmoment ergebende Sollkraftstoffmenge zur Verfügung steht, und sich unter Annahme des vorgebbaren Lambdawertes (11) mit der Sollkraftstoffmenge der Füllungssollwert ergibt, und basierend auf diesem Füllungssollwert (12) eine Drosselklappenstellung (13) eingestellt wird, wobei parallel mit einem Lambdasollwert (7) und einer aus einer Füllungserfassung gemessenen Ist-Luftfüllung (16) eine einzuspritzende Kraftstoffmenge (8) berechnet wird, wobei aus der Stellung des Fahrpedals (1) ein Wunschdrehmoment (2) für den Kraftstoffpfad errechnet und in einen für die Betriebsart homogene Kompressionszündung als optimal ermittelten Lambdawert (4), in einen Lambdawert (5) an der Fettgrenze des Brennverfahrens homogener Kompressionszündung und in einen Lambdawert (6) an der Magergrenze des Brennverfahrens homogener Kompressionszündung umgerechnet wird und wobei sich der Lambdasollwert (7) aus dem für die Betriebsart homogene Kompressionszündung als optimal ermittelten Lambdawert (4) ergibt, solange der für die Betriebsart homogene Kompressionszündung als optimal ermittelte Lambdawert (4) innerhalb der Fett- bzw. Magergrenze des Brennverfahrens homogener Kompressionszündung ist, wobei zur Kompensation dynamischer Vorgänge die Kraftstoffmasse innerhalb der Fett- und Magergrenzen variiert wird.

2. Verfahren nach Anspruch 1,
**dadurch gekennzeichnet, dass**
der optimale Lambdawert (4) sowie der Lambdawert an der Fett- und Magergrenze (5, 6) des Betriebsverfahrens homogener Kompressionszündung am Prüfstand arbeitspunktabhängig ermittelt und in arbeitspunktabhängigen Kennfeldern im Steuergerät abgelegt werden.

## Claims

1. Method for operating an internal combustion engine with a combustion process with homogeneous auto-ignition, in which method the driver demand predefined by means of an accelerator pedal (1) is converted into a demanded torque to be output by the internal combustion engine, wherein a charge setpoint value (12) for the air charge is determined by means of a lambda value (11) which is predefinable in a working-point-dependent manner by virtue of a demanded torque for the air path being calculated from the position of the accelerator pedal (1), wherein the operating point predefined by load and engine speed is a further influential variable, and, at the output of a calculation of the demanded torque for the air path, a setpoint fuel quantity arising from said demanded torque is available, and, adopting the predefinable lambda value (11) with the setpoint fuel quantity, the charge setpoint value is obtained, and a throttle flap position (13) is set based on this charge setpoint value (12), wherein, in parallel with a lambda setpoint value (7) and an actual air charge (16) measured from a charge detection, a fuel quantity (8) to be injected is calculated, wherein, from the position of the accelerator pedal (1), a demanded torque (2) for the fuel path is calculated and converted into a lambda value (4) determined as optimal for the homogeneous compression ignition operating mode, into a lambda value (5) at the rich boundary of the homogeneous compression ignition combustion process and into a lambda value (6) at the lean boundary of the homogeneous compression ignition combustion process, and wherein the lambda setpoint value (7) is obtained from the lambda value (4) determined as optimal for the homogeneous compression ignition operating mode for as long as the lambda value (4) determined as optimal for the homogeneous compression ignition operating mode is within the rich and lean boundaries of the homogeneous compression ignition operating mode, wherein the fuel mass is varied within the rich and lean boundaries for the purposes of compensating dynamic processes.

2. Method according to Claim 1,
**characterized in that**
the optimum lambda value (4) and the lambda value at the rich and lean boundaries (5, 6) of the homogeneous compression ignition operating process are determined in an operating-point-dependent manner on a test stand and are stored in operating-point-dependent characteristic maps in the control unit.

## Revendications

1. Procédé pour faire fonctionner un moteur à combustion interne avec un procédé de combustion à autoallumage homogène, avec lequel le souhait du conducteur prédéfini par le biais d'une pédale d'accélérateur (1) est converti en un couple souhaité à délivrer par le moteur à combustion interne, une valeur de consigne de remplissage (12) étant déterminée pour le remplissage en air par le biais d'une valeur lambda (11) pouvant être prédéfinie en fonction du point de fonctionnement en calculant un couple souhaité pour le trajet d'air à partir de la position de la pédale d'accélérateur (1), le point de fonctionnement prédéfini par la charge et la vitesse de rotation étant une grandeur influente supplémentaire et une quantité de carburant de consigne résultant du couple souhaité étant disponible à la sortie d'un calcul de ce couple souhaité, et la valeur de consigne de remplissage étant obtenue dans l'hypothèse de la valeur lambda (11) pouvant être prédéfinie avec la quantité de carburant de consigne, et une position de clapet d'étranglement (13) étant réglée en se basant sur cette valeur de consigne de remplissage (12), une quantité de carburant (8) à injecter étant calculée parallèlement à une valeur lambda de consigne (7) et un remplissage en air réel (16) mesuré à partir d'une détection de remplissage, un couple souhaité (2) pour le trajet de carburant étant calculé à partir de la valeur de consigne de remplissage et une valeur lambda (4) déterminée comme étant optimale pour le mode de fonctionnement à allumage par compression homogène étant converti en une valeur lambda (5) à la limite riche du procédé de combustion à allumage par compression homogène et en une valeur lambda (6) à la limite pauvre du procédé de combustion à allumage par compression homogène et la valeur lambda de consigne (7) étant obtenue à partir de la valeur lambda (4) déterminée comme étant optimale pour le mode de fonctionnement à allumage par compression homogène tant que la valeur lambda (4) déterminée comme étant optimale pour le mode de fonctionnement à allumage par compression homogène se trouve à l'intérieur de la limite riche ou pauvre du procédé de combustion à allumage par compression homogène, la masse de carburant à l'intérieur des limites riche et pauvre étant variée en vue de compenser les phénomènes dynamiques.

2. Procédé selon la revendication 1, **caractérisé en ce que** la valeur lambda (4) optimale ainsi que la valeur lambda de la limite riche et pauvre (5, 6) du procédé de fonctionnement à allumage par compression homogène sont déterminées au banc d'essai en fonction du point de fonctionnement et enregistrées dans des diagrammes caractéristiques dans un contrôleur.
